# EUROPEAN PATENT SPECIFICATION

(11) **EP 2 939 200 B1**
(45) Date of publication and mention of the grant of the patent: **15.05.2019**
(21) Application number: 13869006.0
(22) Date of filing: 30.12.2013
(51) Int. Cl.: G06Q 30/02

(54) **METHOD AND APPARATUS FOR SECURE ADVERTISING**
VERFAHREN UND VORRICHTUNG FÜR SICHERE WERBUNG
PROCÉDÉ ET APPAREIL DE PUBLICITÉ SÉCURISÉE

(30) Priority: 29.12.2012 US 201261747283 P
(43) Date of publication of application: 04.11.2015
(73) Proprietor: Nokia Technologies Oy, 02610 Espoo (FI)
(72) Inventor: BISWAS, Debmalya, CH-1018 Lausanne (CH)
(74) Representative: Seppo Laine Oy
(86) International application number: PCT/FI2013/051209
(87) International publication number: WO 2014/102456

(56) References cited:
- US-A1- 2010 042 403
- US-A1- 2011 164 746
- DAN BONEH ET AL: "Public Key Encryption with Keyword Search", 17 April 2004 (2004-04-17), ADVANCES IN CRYPTOLOGY - EUROCRYPT 2004; [LECTURE NOTES IN COMPUTER SCIENCE;;LNCS], SPRINGER-VERLAG, BERLIN/HEIDELBERG, PAGE(S) 506 - 522, XP019005037, ISBN: 978-3-540-21935-4 * pages 506-509 *
- Karthick Ramachandran ET AL: "A Privacy Preserving Solution for Webmail Systems with Searchable Encryption", International Journal on Advances in Security, 30 June 2012 (2012-06-30), pages 36-45, XP055260320, Retrieved from the Internet: URL:http://www.thinkmind.org/download.php? articleid=sec_v5_n12_2012_4 [retrieved on 2016-03-22]
- JOONSANG BAEK ET AL: "Public Key Encryption with Keyword Search Revisited", 30 June 2008 (2008-06-30), COMPUTATIONAL SCIENCE AND ITS APPLICATIONS - ICCSA 2008; [LECTURE NOTES IN COMPUTER SCIENCE], SPRINGER BERLIN HEIDELBERG, BERLIN, HEIDELBERG, PAGE(S) 1249 - 1259, XP019091500, ISBN: 978-3-540-69838-8 * page 1251 *
- DEBMALYA BISWAS ET AL: "Privacy Preserving Profiling for Mobile Services", PROCEDIA COMPUTER SCIENCE, vol. 10, 10 August 2012 (2012-08-10), pages 569-576, XP028415433, ISSN: 1877-0509, DOI: 10.1016/J.PROCS.2012.06.073 [retrieved on 2012-08-10]
- BONEH, D ET AL.: 'Public key encryption with keyword search' PROC. OF EUROCRYPT 2004, LNCS 3027 2004, pages 506 - 522, XP019005037 Retrieved from the Internet: <URL:http://crypto.stanford.edu/~dabo/pubs/ papers/encsearch.pdf> [retrieved on 2014-03-25]
- RAMACHANDRAN, K. ET AL.: 'A privacy preserving solution for webmail systems with searchable encryption' INTERNATIONAL JOURNAL ON ADVANCES IN SECURITY 5.1 AND 2 (2012) 30 June 2012, pages 36 - 45, XP055260320 Retrieved from the Internet: <URL:http://www.thinkmind.org/index.php?vie w=article&articleid=sec-v5-nl2_2012_4> [retrieved on 2014-03-25]
- BAEK, J ET AL.: 'Public key encryption with keyword search revisited' LECTURE NOTES IN COMPUTER SCIENCE vol. 5072, 2008, pages 1249 - 1259, XP019091500 Retrieved from the Internet: <URL:http://link.springer.com/chapter/10.10 07%2F978-3-540-69839-5 _96#> [retrieved on 2014-03-25]
- BISWAS, D. ET AL.: 'Privacy Preserving Profiling for Mobile Services' 9TH INT. CONF. ON MOBILE WEB INFORMATION SYSTEMS (MOBIWIS). PROCEDIA COMP. SCIENCE vol. 10, 10 August 2012, pages 569 - 576, XP028415433
- SHIKFA, A. ET AL.: 'Broker-based private matching' PETS 2011, THE 11TH PRIVACY ENHANCING TECHNOLOGIES SYMPOSIUM vol. 6794, 27 July 2011, WATERLOO, CANADA, pages 264 - 284, XP047025544 Retrieved from the Internet: <URL:https://wvwv.eurecom.fr/fr/publication /34491detail/broker-based-private-matching> [retrieved on 2014-03-25]

## Description

### CROSS-REFERENCE TO RELATED APPLICATIONS

The present application claims priority to U.S. Provisional Application No. 61/747,283, filed December 29, 2012, the entire contents of which are incorporated herein by reference.

### TECHNOLOGICAL FIELD

An example embodiment of the present invention relates generally to advertising and, more particularly, to the provision of targeted advertising in a secure manner.

### BACKGROUND

Numerous applications and services are available for users of mobile terminals, such as cellular telephones, personal digital assistants (PDAs), smartphones, tablet computers or the like. One reason for the popularity of applications and services is the customization of the services provided to the user of a mobile terminal. This customization may be based upon information provided by the mobile terminal, such as information gathered by one or more hardware and/or logical sensors carried by the mobile terminal.

In order to reach their fullest potential, applications or services would be both real time and context based with access to the user's profile and current contextual information. While hardware and/or logical sensors carried by mobile terminals are capable of detecting a wide variety of contextual information and while techniques are available to reconstruct higher level activities from lower level information collected by the hardware and/or logical sensors, users are generally reluctant to share their personal information, such as the contextual information collected by hardware and/or logical sensors, with third-party service providers. In this regard, users are concerned about the privacy implications that could arise if such personal information were obtained by an undesirable party.

With respect to advertisements, broker-type of advertising platforms serve customized advertisements to mobile terminals based on contextual information including the searches conducted by the mobile terminal, the content of the messages exchanged by the mobile terminal, etc. In order to customize the advertisements served to the mobile terminal, the advertising platform must have access to the contextual information associated with the mobile terminal. As noted above, however, a number of users would prefer for the advertising platform to not have access to the user's contextual information so as to more fully protect the user's privacy. Even in instances in which advertisements are served, however, some advertisements may be inappropriate. In this regard, some advertisements are for only limited periods of time or for certain geographical regions. In instances in which the advertisements that are served have expired or are irrelevant within the region within which the user of the mobile terminal is located, the advertisements are at best superfluous and, in many instances, may cause the user of the mobile terminal to lose faith in the efficiency of the advertisement system.

DAN BONEH ET AL : " Public Key Encryption with Keyword Search", 17 April 2004 (2004-04-17), ADVANCES IN CRYPTOLOGY -EUROCRYPT 2004; PAGE(S) 506 - 522, XP019005037, ISBN: 978-3-540-21935-4 discloses use of public key encryption with keyword search (PEKS). A receiver of emails, Alice, provides a trapdoor with keywords for email server. A sender of the emails, Bob, appends searchable encryptions with keywords to an email to Alice. The email server detects keyword-matching encrypted messages from Bob and can send such messages e.g. to a particular device of Alice.

US2010/0042403 discloses a system for inferring user context and delivering advertisements. Advertisements may be selected based on mobile device context.

### BRIEF SUMMARY

The present invention is directed to subject-matter as disclosed by appended claims.

A method, apparatus, and computer program product are provided in accordance with an example embodiment in order to provide advertisements based upon the current context of the user in a manner that both ensures the relevancy of the advertisements and maintains the privacy of the contextual information of the user. As such, the method, apparatus and computer program product of an example embodiment may serve more relevant advertisements by receiving and analyzing the contextual information which may be provided in a timely and secure manner by a user since the privacy considerations of the user with respect to the contextual information will be safeguarded. In addition, the method, apparatus and computer program product of an example embodiment may ensure that the advertisements that are served are relevant, such as in terms of serving advertisements that are both valid and related to the geographical region in which the mobile terminal is located. Thus, the method, apparatus and computer program product of an example embodiment may improve the quality of the advertisements that are served, thereby improving the user experience with respect to such advertisements.

In one embodiment, a method is provided that includes receiving encrypted context data from one or more users including one or more trapdoors associated with one or more keywords. The method of this embodiment also includes receiving advertisement information from one or more advertisers including a searchable encryption. Further, the method of this embodiment includes causing an advertisement to be provided to a first user based upon the encrypted context data of the first user and the advertisement information from one or more advertisers.

In another embodiment, an apparatus is provided that includes at least one processor and at least one memory including computer program instructions with the at least one memory and the computer program instructions configured to, with the at least one processor, cause the apparatus at least to receive encrypted context data from one or more users including one or more trapdoors associated with one or more keywords. The at least one memory and the computer program instructions are also configured to, with the at least one processor, cause the apparatus of this embodiment to receive advertisement information from one or more advertisers including a searchable encryption and to cause an advertisement to be provided to a first user based upon the encrypted context data of the first user and the advertisement information from one or more advertisers.

In a further embodiment, the computer program product is provided that includes at least one non-transitory computer-readable storage medium bearing computer program instructions embodied therein for use with a computer with the computer program instructions including instructions that are configured to receive encrypted context data from one or more users including one or more trapdoors associated with one or more keywords. The computer program instructions of this embodiment also include instructions configured to receive advertisement information from one or more advertisers including a searchable encryption. The computer program instructions of this embodiment further include instructions configured to cause an advertisement to be provided to a first user based upon the encrypted context data of the first user and the advertisement information from one or more advertisers.

In yet another embodiment, an apparatus is provided that includes means for receiving encrypted context data from one or more users including one or more trapdoors associated with one or more keywords. The apparatus of this embodiment also includes means for receiving advertisement information from one or more advertisers including a searchable encryption. In this embodiment, the apparatus also includes means for causing an advertisement to be provided to a first user based upon the encrypted context data of the first user and the advertisement information from one or more advertisers.

### DETAILED DESCRIPTION OF THE DRAWINGS

Having thus described certain embodiments of the invention in general terms, reference will now be made to the accompanying drawings, which are not necessarily drawn to scale, and wherein:
Figure 1 is a block diagram of a system including a plurality of users, a plurality of advertisers and a service provider for causing contextually appropriate advertisements to be served in accordance with an example embodiment of the present invention;
Figure 2 is an apparatus that may be specifically configured in accordance with an example embodiment of the present invention; and
Figure 3 is a flow chart illustrating the operations performed, such as by the specifically configured apparatus of Figure 2, in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

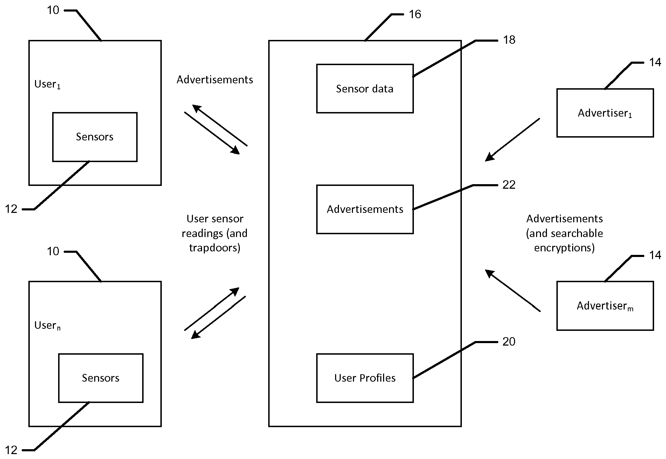

Referring now to Figure 1, one or more users 10 designated User₁,...,Userₙ and one or more advertisers 14 designated Advertiser₁,...,Advertiserₘ may be in communication with a service provider 16 configured to provide contextually appropriate advertisements to the users. The users may be various types of computing devices, such as mobile terminals, fixed computing devices or the like. In this regard, the mobile terminals may include, for example, a mobile telephone, a smartphone, a portable digital assistant (PDA), a tablet computer, a laptop computer, a touch surface, a gaming device, a camera, an electronic book, a pager, a mobile television, a gaming device, a camera, a video recorder, an audio/video player, a radio, a positioning device (e.g., global positioning system (GPS) device), or any combination of the aforementioned, and other types of voice and text communications systems. Additionally or alternatively, the fixed computing devices may include, for example, a desktop computer, a computer workstation or the like. The advertisers may also be embodied by computing devices configured to provide advertisements to the service provider.

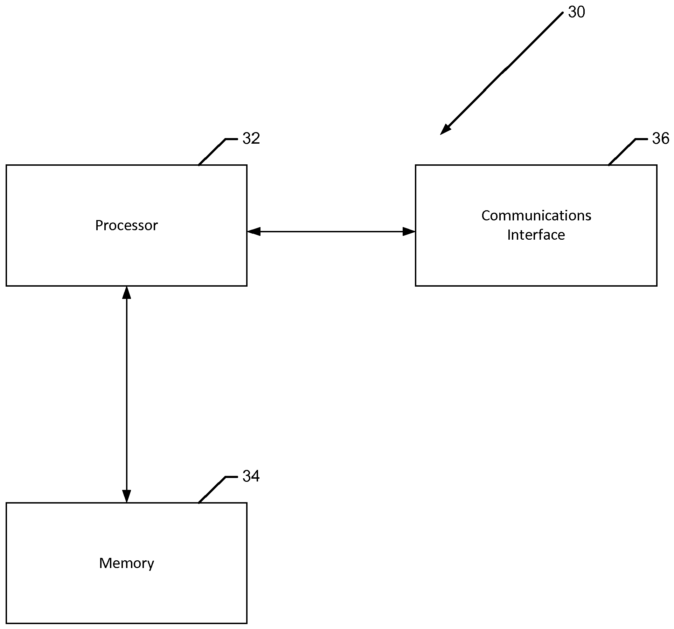

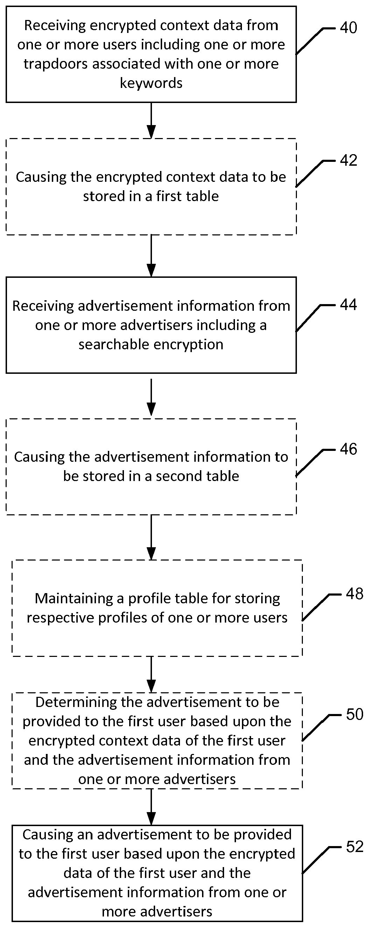

The service provider 16 may also be embodied by a computing device, such as a server or other network entity. In one embodiment, the service provider is embodied as cloud storage. By way of example, the service provider may include or otherwise be associated with an apparatus 30 as generally described below in conjunction with Figure 2 for performing one or more of the operations set forth by the flowchart of Figure 3 and also described below. It should also be noted that while Figure 2 illustrates one example of a configuration of an apparatus for providing contextually appropriate advertisements to the users 10, numerous other configurations may also be used to implement other embodiments of the present invention. As such, in some embodiments, although devices or elements are shown as being in communication with each other, hereinafter such devices or elements should be considered to be capable of being embodied within the same device or element and thus, devices or elements shown in communication should be understood to alternatively be portions of the same device or element.

Referring now to Figure 2, the apparatus 30 for providing contextually appropriate advertisements to the users in accordance with one example embodiment may include or otherwise be in communication with a processor 32, a memory 34 and a communication interface 36. In some embodiments, the processor (and/or co-processors or any other processing circuitry assisting or otherwise associated with the processor) may be in communication with the memory device via a bus for passing information among components of the apparatus. The memory device may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

In some embodiments, the apparatus 30 may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 32 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 32 may be configured to execute instructions stored in the memory device 34 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

Meanwhile, the communication interface 36 may be any means such as a device or circuitry embodied in either hardware or a combination of hardware and software that is configured to receive and/or transmit data from/to a network and/or any other device or module in communication with the apparatus 30, such as by supporting communications with the other computing device. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

As shown in Figure 1, each user 10 may provide contextual information, such as contextual information that may be collected by one or more hardware and/or logical sensors 12. The contextual information provided by the users may be any of a wide variety of contextual information including, for example, position information, accelerometer information, information regarding prior or current searches conducted by the user, information regarding messages exchanged by the user or the like. The service provider 16 may, in turn, store the contextual information, such as within a sensor data table (Sens) 18. In one embodiment, a sensor data table may include, for each contextual information element, a time stamp indicating the time at which the contextual information was recorded, the user identification (ID) uniquely identifying the respective user that provides the contextual information and the contextual information itself, such as the sensor value. The service provider may also store user profile information, such as in a user profiles table 20. A variety of information regarding a user may be stored within the user profiles table including, for example, cryptographic keys associated with the user as described below. Although the user profiles table may be arranged in various manners, the user profiles table of one embodiment may utilize user ID as the primary key. The service provider of one embodiment may maintain the sensor data table and the user profiles table in memory 34.

The advertisers 14 may also provide advertising information to the service provider 16. The service provider may store the advertisement information. In one embodiment, for example, the service provider stores the advertisement information in a table, such as in an advertisements table (Adv) 22, which may also be maintained in memory 34. Although a variety of different types of advertisement information may be stored within an advertisements table depending upon the advertisement information that is provided, the advertisements table of one embodiment may store, in conjunction with each advertisement information element, a time stamp indicating the insertion time of the advertisement within the advertisements table, an advertiser ID uniquely identifying the advertiser that provides the advertisement information, a user ID that permits an advertiser to personalize advertisements based upon a respective user profile, the advertisement itself, such as the text or other content details of the advertisement, and a set of tags characterizing the advertisements, such as keywords, location, context, time period during which the advertisement is valid, etc. In one embodiment, each advertiser may only have a single advertisement per user active at any one time. Although the advertisement table may be arranged in various manners, the advertisement table of one embodiment utilizes the advertiser ID together with the user ID as the primary keys. In the foregoing example, a single sensor data table, a single user profiles table and a single advertisement table were described. However, the service provider may maintain any number of each type of table in other embodiments.

Referring now to Figure 3, the operations performed, such as by the apparatus 30 of Figure 2 embodied by the computing device of a service provider 16, will be described. As shown in block 40 of Figure 3, the apparatus may include means, such as the processor 32, the communications interface 36 or the like, for receiving encrypted context data from one or more users 10. The context data may include contextual information provided by hardware and/or logical sensors 12 of a user's computing device. Additionally, the apparatus, such as the processor, the communications interface or the like, may receive from the user one or more trapdoors associated with one or more respective keywords, thereby allowing a search of the encrypted context data based upon the one or more respective keywords. The trapdoors may be provided with the context data, in advance of the context data or following the context data. By way of example, the user may define one or more trapdoors associated with one or more keywords and may then provide the trapdoors and associated keywords to the service provider in a transaction Xᵢ that may be defined as Xᵢ::=[update(Sens, Uᵢ, cᵢ) wherein cᵢ=DOOR(U_{iᵣ}, vᵢ)] in which cᵢ is the trapdoor of user Uᵢ associated with the keyword vᵢ of sensor data table Sens. In this embodiment, DOOR(Uᵣ, w) is a polynomial time randomized algorithm of a PEKS technique that outputs a trapdoor t_{w} that allows a search of context data that has been encrypted utilizing the user's private key Uᵣ by keyword w.

The context data may be encrypted in various manners, such as by utilizing a public-private key pair. In one embodiment, user Uᵢ may generate a public-private key pair (U_{i_{b}}, U_{iᵣ}). While the public-private key pairs may be generated in various manners, the user's computing device of one embodiment may generate the public-private key pair utilizing a polynomial time randomized algorithm KGEN (1^{k}) that outputs a public-private key pair (U_{b}, Uᵣ) for user U in accordance with a public-key encryption with keyword search (PEKS) technique. The user may then register with the service provider S and provide the public key. The service provider may store the public key in the users profile table 20. Thereafter, the user may provide context data encrypted with its private key using the DOOR algorithm, for example, to the service provider, such as either periodically or at each instance following the receipt of new or different context data from the sensors 12. In one embodiment, the user may provide and the service provider may receive the encrypted context data in accordance with a data manipulation operation defined as update(Sens, Uᵢ, cᵢ) such that the Uᵢ row of sensor data table Sens is updated with the value cᵢ. Thus, in addition to receiving encrypted context data from one or more users including one or more trapdoors associated with the respective keywords as shown in block 40, the apparatus 30 embodied by the computing device of the service provider 16 may also include means, such as the processor 32, the memory 34 or the like, for causing the encrypted context data to be stored in a first table, such as the sensor data table 18. See block 42 of Figure 2.

Similarly, the apparatus 30 embodied by the computing device of the service provider 16 may include means, such as the processor 32, the communications interface 36 or the like, for receiving advertisement information from one or more advertisers 14 including a searchable encryption. See block 44 of Figure 3. The advertisement information may be encrypted by the advertiser. Although the advertisement information may be encrypted in various manners, the computing devices of the advertisers may also initially generate a public-private key pair (A_{i_{b}}, A_{iᵣ}), as described above in conjunction with the users 10. While the computing devices of the advertisers may generate the public-private key pairs in various manners, the computing devices of the advertisers of one embodiment may generate the public-private key pair based upon the KGEN (1^{k}) algorithm. The computing device of each advertiser may then register with the service provider so as to provide the public key, which may be stored by the service provider in the memory 34. The advertisers may also receive the users' public keys from the service provider upon registering with the service provider, as the advertiser's may require the user's public keys to generate the searchable encryption SENC, which is described below. In one embodiment, the advertisers are not provided with the public keys of all registered users, but, instead, the service provider may be configured to apply selective access control by providing the public keys of only those users to an advertiser that have explicitly agreed to receive advertisements from that advertiser, thereby providing the users with an option to not receive advertisements from some advertisers. In this regard, the lack of a public key of a user implies that the advertiser will not be able to generate searchable encryptions for the respective user, thereby effectively preventing any matching advertisements to be determined for the specific user, advertiser pair. Each advertiser may then upload its advertisements with corresponding tags that have been encrypted with the advertiser's private key to the service provider.

In this regard, the computing device of the advertiser 14 may upload the advertisements with the corresponding encrypted tags as a transaction tₖ consisting of a sequence of update operations that may each be defined as Yₖ::=[update(Adv, Aₖ, Uᵢ, {aᵢ=SENC (U_{i_{b}}, gᵢ, advᵢ)})]_{i=1...p} wherein p is the number of registered users in the system. In this regard, the computing device of an advertiser may provide the advertisement information to the service provider 16 in various manners including, for example, as a data manipulation operation defined as follows: update(Adv, Aₖ, Uᵢ, (advᵢ, {gᵢ})) with the semantics that the (Aₖ, Uᵢ) row of the advertisement table Adv is updated to the value pair (advᵢ, {gᵢ}) wherein advᵢ and {gᵢ} refer to the updated advertisement adv and its tags g, respectively. Additionally, SENC is a polynomial time randomized algorithm of the PEKS technique in which SENC(U_{b}, w, m) outputs a searchable encryption s_{w} of message m under keyword w and public key U_{b}. In addition to receiving the advertisement information from one or more advertisers including a searchable encryption as shown in block 44, the apparatus 30 embodied by the computing device of the service provider may also include means, such as the processor 32, the memory 34 or the like, for causing the advertisement information to be stored in a second table, such as the Adv table 22, as shown in block 46 of Figure 3.

As described, the apparatus 30 embodied by the computing device of the service provider 16 may also include means, such as the processor 32, the memory 34 or the like, for maintaining a user profile table 20 for storing respective profiles of the one or more users 10 as shown in block 48 of Figure 3. In this regard, a user profile table may include the public keys provided by the users as well as the user IDs associated with the users. Thus, the apparatus, such as the processor, may access the public keys of the user based upon the user ID of the respective user.

As shown in block 50 of Figure 3, the apparatus 30 embodied by the computing device of the service provider 16 may also include means, such as the processor 32 or the like, for determining the advertisement to be provided to a first user based upon the encrypted context data of the first user and the advertisement information for one or more advertisers 14. This determination may be performed repeatedly, such as on a periodic basis or in response to updated contextual information from the first user. In one embodiment, the apparatus, such as the processor, may determine if an advertisement is to be provided by initially retrieving the first user's current data from the sensor data table Sens. The retrieval of the first user's current data may be defined as cᵢ=select(Sens, Uᵢ) wherein select(table, key) returns the corresponding row value from a respective table with the row being defined by the key, such as the User ID in regards to the sensor data table or the Advertiser ID and User ID pair in regards to the advertisements table. The apparatus, such as a processor, of this embodiment may then perform a sequence of select and test operations wherein a test operation is a polynomial time randomized algorithm of a PEKS technique that may be defined as TEST(U_{b}, s_{w}, t_{w'}) that outputs the message m in an instance in which w equals w'. In this regard, the sequence of select and test operations may determine the current data associated with the first user Uᵢ, which may be defined as a matchmaking transaction Zᵢ::=cᵢ=select(Sens, Uᵢ) and the relevant advertisements, which may be determined as [wᵢ, {a}ᵢ =select(Adv, (Aₖ, Uᵢ)); advᵢ=TEST(U_{i_{b}}, cᵢ, a ∈ {A}ᵢ)]ₖ=_{l...q} for each of q registered advertisers. The result provided by the apparatus, such as the processor, may be a plurality, e.g., a list, of (time stamp, advertisement) pairs, e.g., (wₗ, advₗ), ... (wₘ, advₘ), wherein m ≤ k with k being the number of advertisers. As indicated by the inequality above, not all k advertisers may have a relevant advertisement for the first user Uᵢ.

Once the apparatus 30, such as the processor 32, has determined the advertisement to be provided to the first user, the apparatus embodied by the computing device of the service provider 16 may include means, such as the processor, the communications interface 36 or the like, for causing an advertisement to be provided to a first user based upon the encrypted context data of the first user and the advertisement information from one or more advertisers. See block 52 of Figure 3. By employing a PEKS technique, the context data of the user may remain encrypted such that users 10 will more readily share the encrypted context data with the service provider. However, the use of trapdoors defined by the users and a searchable encryption provided by the advertisers 14 permits the encrypted context data to be searched for one or more keywords such that more relevant advertisements for the current context of the users may be determined. As such, more relevant advertisements may be delivered to the users following a process that ensures that the advertisements are relevant in terms of time, e.g., the advertisements are still valid, and geographically appropriate.

The apparatus 30, such as the processor 32, embodied by the computing device of the service provider 16 may also be configured to detect conflict, such as in terms of optimistic concurrency control, following updates to the tables maintained by the service provider and prior to committing to a transaction, such as prior to delivering an advertisement to a user 10. Such conflict detection may be desired since the various transactions Xᵢ, Yₖ and Zⱼ can occur simultaneously. By way of example, updates to the sensor data table Sens and to the advertisement table Adv can occur in parallel. Since these updates operate upon separate tables, there is no conflict between them and they may be performed independently and in parallel. Additionally, an update to the sensor data table Sens for user Uᵢ and the matchmaking transaction Zⱼ for a different user does not pose a conflict since different users are involved.

However, an update to the sensor data table Sens for user Uᵢ and a matchmaking transaction Zᵢ for the same user Uᵢ may pose a conflict. In this regard, the apparatus 30 embodied by the computing device of the service provider 16 may include means, such as the processor 32 or the like, for determining that the encrypted context data of a first user has been updated prior to causing the advertisement to be provided to the first user. In this embodiment, the apparatus may also include means, such as the processor or the like, for aborting provision of the advertisement to the first user. In other words, if the context data associated with the first user is changed or updated, such as the result of an Xᵢ transaction, while a matchmaking transaction Zᵢ is ongoing and prior to the provision of the advertisement information to the first user, the apparatus embodied by the computing device of the service provider of this embodiment will provide for the sensor data table Sens to be updated, while aborting the matchmaking transaction Zᵢ since the matchmaking transaction Zᵢ may produce irrelevant advertisements as a result of changes to the first user's current context.

Additionally, a change to the advertisement information prior to provision of an advertisement to a user may also pose a conflict. For example, in an instance in which an advertiser Aₖ updates the (Aₖ, Uᵢ) row of the advertisement table Adv, a matchmaking transaction Zᵢ associated with the first user may or may not be appropriate. As such, the apparatus 30, such as the processor 32, may permit the Yₖ transaction to be performed so as to update the advertisement table Adv, but the matchmaking transaction Zᵢ is neither completed nor aborted immediately. Instead, the apparatus, such as the processor, of this embodiment may permit the Zᵢ transaction to complete, but prior to providing the advertisements to the first user, the apparatus, such as the processor, may compare, for each advertisement that has been determined by the Zᵢ transaction to be delivered to the first user, the time stamp wᵢ with the current time stamp w_{curr} of the (Aₖ, Uᵢ) row of the advertisement table Adv that has just been updated. In each instance in which the advertisement is such that w_{curr} exceeds wᵢ, the corresponding advertisement advᵢ is dropped or deleted from the list of advertisements to be provided to the first user since the advertisement information associated with the first user has changed more recently than the information utilized in determining the advisements to be provided to the first user. However, for the other advertisements that were determined to be relevant for the first user and for which the time stamp of the respective advertisements wᵢ is more recent than the time stamp at which the corresponding advertising data w_{curr} was updated, the advertisements may be delivered to the first user. Thus, the apparatus may include means, such as the processor or the like, for determining that the advertisement information has been updated prior to causing the advertisement to be provided to the first user and means, such as the processor or the like, for determining whether the advertisement to be provided to the first user was updated. In an instance in which the advertisement to be provided to the first user was updated, the apparatus may also include means, such as the processor or the like, for aborting provision of the advertisement to the first user.

As described above, conflicts between the various transactions supported by the apparatus 30 embodied by the computing device of the service provider 16 may be handled in accordance with a concurrency control protocol that provides preference to users in the system so that their updated transactions are never aborted, but the user still receives advertisements in a timely fashion. As noted above, a matchmaking transaction may be initiated in each instance in which the user data is updated. Additionally or alternatively, updated advertisements can also be provided to relevant users whenever an advertisement update transaction in the advertisement table Adv is completed. In this regard, the apparatus 30, such as the processor 32, the memory 34 or the like, may maintain a log of the advertisements advₗ, ... advₙ that have been provided to each user such that a determination by the processor can be made as to whether an updated advertisement has been previously provided to the user or not.

As described herein, a method, apparatus 30 and computer program product are provided according to one embodiment in order to provide for atomicity, isolation and consistency in regards to the various transactions. In this regard, atomicity insures that all data operations in a transaction are either performed in their entirety or none at all. In the event of a failure during execution, the transaction is aborted so as to lead to a rollback of all uncommitted changes, if any. In an instance in which several transactions are to be executed concurrently, such as in an effort to improve performance, isolation necessitates that the effects of such concurrent execution are equivalent to that of a serial execution. Isolation may be provided by the concurrency control protocols discussed above. Consistency insures that each transaction moves the system from one consistent state to another. Atomicity and isolation together insure consistency.

As described above, Figure 3 illustrates a flowchart of an apparatus 30, method, and computer program product according to example embodiments of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory 34 of an apparatus employing an embodiment of the present invention and executed by a processor 32 of the apparatus, such as may be embodied by or associated with a computing device of an advertising service provider 16. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowcharts, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, such as represented by the blocks with dashed outlines in Figure 3. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving encrypted context data collected by one or more sensors from one or more user devices including one or more trapdoors associated with one or more keywords;
receiving advertisement information from one or more advertiser devices including a searchable encryption;
determining an advertisement to be provided to a first user device by a matchmaking transaction based upon the encrypted context data of the first user device and the advertisement information; and
causing the advertisement to be provided to the first user device, the method further comprising conflict detection following updates to a first table comprising the encrypted context data and to a second table comprising the advertisement information, comprising:
in response to determining that the encrypted context data of the first user device is updated while the matchmaking transaction is ongoing and prior to causing the advertisement to be provided to the first user device, updating the first table and aborting provision of the advertisement to the first user device, or
in response to determining that the advertisement information has been updated prior to causing the advertisement to be provided to the first user device, determining whether the advertisement to be provided to the first user device was updated; and aborting provision of the advertisement to the first user device in an instance in which the advertisement to be provided to the first user device was updated.

2. A method according to Claim 1, further comprising maintaining a profile table for storing respective profiles of the one or more user devices.

3. An apparatus comprising at least one processor and at least one memory including computer program code, the at least one memory and the computer program code configured to, with the processor, cause the apparatus to at least:
receive encrypted context data collected by one or more sensors from one or more user devices including one or more trapdoors associated with one or more keywords;
receive advertisement information from one or more advertiser devices including a searchable encryption;
determine an advertisement to be provided to a first user device by a matchmaking transaction based upon the encrypted context data of the first user device and the advertisement information; and
cause the advertisement to be provided to the first user device,
wherein the at least one memory and the computer program code are further configured to, with the processor, cause the apparatus to detect conflict following updates to a first table comprising the encrypted context data and to a second table comprising the advertisement information, comprising:
updating the first table and aborting provision of the advertisement to the first user device in response to determining that the encrypted context data of the first user device is updated while the matchmaking transaction is ongoing and prior to causing the advertisement to be provided to the first user device, or
in response to determining that the advertisement information has been updated prior to causing the advertisement to be provided to the first user device, determining whether the advertisement to be provided to the first user device was updated; and aborting provision of the advertisement to the first user device in an instance in which the advertisement to be provided to the first user device was updated.

4. An apparatus according to Claim 3, wherein the at least one memory and the computer program code are further configured to, with the processor, cause the apparatus to maintain a profile table for storing respective profiles of the one or more user devices.

5. An apparatus according to Claim 3 or 4, wherein the apparatus is embodied by a computing device of a service provider.

6. A computer program product comprising at least one non-transitory computer-readable storage medium having computer-executable program code instructions stored therein, the computer-executable program code instructions comprising program code instructions for:
receiving encrypted context data collected by one or more sensors from one or more user devices including one or more trapdoors associated with one or more keywords;
receiving advertisement information from one or more advertiser devices including a searchable encryption;
determining an advertisement to be provided to a first user device by a matchmaking transaction based upon the encrypted context data of the first user device and the advertisement information; and
causing the advertisement to be provided to the first user device, the computer-executable program code instructions further comprising program code instructions for conflict detection following updates to a first table comprising the encrypted context data and to a second table comprising the advertisement information, comprising:
in response to determining that the encrypted context data of the first user device is updated while the matchmaking transaction is ongoing and prior to causing the advertisement to be provided to the first user device, updating the first table and aborting provision of the advertisement to the first user device, or
in response to determining that the advertisement information has been updated prior to causing the advertisement to be provided to the first user device, determining whether the advertisement to be provided to the first user device was updated; and aborting provision of the advertisement to the first user device in an instance in which the advertisement to be provided to the first user device was updated.

## Patentansprüche

1. Verfahren, umfassend:
Empfangen von verschlüsselten Kontextdaten, die durch einen oder mehrere Sensoren von einer oder mehreren Benutzereinrichtungen gesammelt werden und eine oder mehrere Falltüren umfassen, die mit einem oder mehreren Schlüsselwörtern assoziiert sind;
Empfangen von Werbeinformationen von einer oder mehreren Werbereinrichtungen, die eine durchsuchbare Verschlüsselung umfassen; und
Bestimmen einer Werbung, die für eine erste Benutzereinrichtung durch eine Partnervermittlungstransaktion bereitgestellt werden soll, basierend auf den verschlüsselten Kontextdaten der ersten Benutzereinrichtung und den Werbeinformationen;
Veranlassen, dass die Werbung für die erste Benutzereinrichtung bereitgestellt wird, wobei das Verfahren ferner Konflikterkennung nach Aktualisierungen an einer ersten Tabelle, welche die verschlüsselten Kontextdaten umfasst, und an einer zweiten Tabelle umfasst, welche die Werbeinformationen umfasst, umfassend:
in Reaktion auf ein Bestimmen, dass die verschlüsselten Kontextdaten der ersten Benutzereinrichtung aktualisiert werden, während die Partnervermittlungstranskation läuft und bevor veranlasst wird, dass die Werbung für die erste Benutzereinrichtung bereitgestellt wird, Aktualisieren der ersten Tabelle und Abbrechen der Bereitstellung der Werbung für die erste Benutzereinrichtung, oder
in Reaktion auf ein Bestimmen, dass die Werbeinformationen aktualisiert wurden, bevor veranlasst wird, dass die Werbung für die erste Benutzereinrichtung bereitgestellt wird, Bestimmen, ob die für die erste Benutzereinrichtung bereitzustellende Werbung aktualisiert wurde, und Abbrechen der Bereitstellung der Werbung für die erste Benutzereinrichtung, falls die für die erste Benutzereinrichtung bereitzustellende Werbung aktualisiert wurde.

2. Verfahren nach Anspruch 1, ferner umfassend ein Führen einer Profiltabelle zum Speichern von jeweiligen Profilen der einen oder der mehreren Benutzereinrichtungen.

3. Vorrichtung, umfassend mindestens einen Prozessor und mindestens einen Speicher, welcher Computerprogrammcode umfasst, wobei der mindestens eine Speicher und der Computerprogrammcode so konfiguriert sind, dass sie mit dem Prozessor die Vorrichtung wenigstens veranlassen zum:
Empfangen von verschlüsselten Kontextdaten, die durch einen oder mehrere Sensoren von einer oder mehreren Benutzereinrichtungen gesammelt werden und eine oder mehrere Falltüren umfassen, die mit einem oder mehreren Schlüsselwörtern assoziiert sind;
Empfangen von Werbeinformationen von einer oder mehreren Werbereinrichtungen, die eine durchsuchbare Verschlüsselung umfassen;
Bestimmen einer Werbung, die für eine erste Benutzereinrichtung durch eine Partnervermittlungstransaktion bereitgestellt werden soll, basierend auf den verschlüsselten Kontextdaten der ersten Benutzereinrichtung und den Werbeinformationen; und
Veranlassen, dass die Werbung für die erste Benutzereinrichtung bereitgestellt wird,
wobei der mindestens eine Speicher und der Computerprogrammcode ferner so konfiguriert sind, dass sie mit dem Prozessor die Vorrichtung nach Aktualisierungen an einer ersten Tabelle, welche die Kontextdaten umfasst, und an einer zweiten Tabelle, welche die Werbeinformationen umfasst, zum Erkennen von Konflikt veranlassen, umfassend:
Aktualisieren der ersten Tabelle und Abbrechen der Bereitstellung der Werbung für die erste Benutzereinrichtung in Reaktion auf ein Bestimmen, dass die verschlüsselten Kontextdaten der ersten Benutzereinrichtung aktualisiert werden, während die Partnervermittlungstranskation läuft und bevor veranlasst wird, dass die Werbung für die erste Benutzereinrichtung bereitgestellt wird, oder
in Reaktion auf ein Bestimmen, dass die Werbeinformationen aktualisiert wurden, bevor veranlasst wird, dass die Werbung für die erste Benutzereinrichtung bereitgestellt wird, Bestimmen, ob die für die erste Benutzereinrichtung bereitzustellende Werbung aktualisiert wurde, und Abbrechen der Bereitstellung der Werbung für die erste Benutzereinrichtung, falls die für die erste Benutzereinrichtung bereitzustellende Werbung aktualisiert wurde.

4. Vorrichtung nach Anspruch 3, wobei der mindestens eine Speicher und der Computerprogrammcode so konfiguriert sind, dass sie mit dem Prozessor die Vorrichtung zum Führen einer Tabelle zum Speichern jeweiliger Profile der einen oder der mehreren Benutzereinrichtungen veranlassen.

5. Vorrichtung nach Anspruch 3 oder 4, wobei die Vorrichtung durch eine Computervorrichtung eines Dienstanbieters realisiert ist.

6. Computerprogrammprodukt, umfassend mindestens ein nicht-transitorisches computerlesbares Speichermedium mit darauf gespeicherten computerausführbaren Programmcodeanweisungen, wobei die computerausführbaren Programmcodeanweisungen Programmcodeanweisungen umfassen zum:
Empfangen von verschlüsselten Kontextdaten, die durch einen oder mehrere Sensoren von einer oder mehreren Benutzereinrichtungen gesammelt werden und eine oder mehrere Falltüren umfassen, die mit einem oder mehreren Schlüsselwörtern assoziiert sind;
Empfangen von Werbeinformationen von einer oder mehreren Werbereinrichtungen, die eine durchsuchbare Verschlüsselung umfassen;
Bestimmen der Werbung, die für die erste Benutzereinrichtung durch eine Partnervermittlungstransaktion bereitgestellt werden soll, basierend auf den verschlüsselten Kontextdaten der ersten Benutzereinrichtung und den Werbeinformationen; und
Veranlassen, dass die Werbung für die erste Benutzereinrichtung bereitgestellt wird, wobei das Verfahren ferner Konflikterkennung nach Aktualisierungen an einer ersten Tabelle, welche die verschlüsselten Kontextdaten umfasst, und an einer zweiten Tabelle umfasst, welche die Werbeinformationen umfasst, umfassend:
in Reaktion auf ein Bestimmen, dass die verschlüsselten Kontextdaten der ersten Benutzereinrichtung aktualisiert werden, während die Partnervermittlungstranskation läuft und bevor veranlasst wird, dass die Werbung für die erste Benutzereinrichtung bereitgestellt wird, Aktualisieren der ersten Tabelle und Abbrechen der Bereitstellung der Werbung für die erste Benutzereinrichtung, oder
in Reaktion auf ein Bestimmen, dass die Werbeinformationen aktualisiert wurden, bevor veranlasst wird, dass die Werbung für die erste Benutzereinrichtung bereitgestellt wird, Bestimmen, ob die für die erste Benutzereinrichtung bereitzustellende Werbung aktualisiert wurde, und Abbrechen der Bereitstellung der Werbung für die erste Benutzereinrichtung, falls die für die erste Benutzereinrichtung bereitzustellende Werbung aktualisiert wurde.

## Revendications

1. Procédé comprenant :
la réception de données de contexte cryptées recueillies par un ou plusieurs capteurs auprès d'un ou plusieurs dispositifs utilisateurs incluant une ou plusieurs portes dérobées associées à un ou plusieurs mots-clés,
la réception d'informations d'annonces provenant d'un ou plusieurs dispositifs annonceurs incluant un cryptage consultable,
la détermination de la fourniture d'une annonce à un premier dispositif utilisateur grâce à une transaction de mise en correspondance fondée sur les données de contexte cryptées du premier dispositif utilisateur et sur les informations d'annonces, et
l'opération consistant à mettre à disposition l'annonce au premier dispositif utilisateur, le procédé comprenant en outre la détection de conflits à la suite de mises à jour sur une première table comprenant les données de contexte cryptées et sur une seconde table comprenant les informations d'annonces, comprenant :
en réponse à la détermination de ce que les données de contexte cryptées du premier dispositif utilisateur sont mises à jour alors que la transaction de mise en correspondance est en cours d'exécution et avant la fourniture de l'annonce au premier dispositif utilisateur : la mise à jour de la première table et l'annulation de la fourniture de l'annonce au premier dispositif, ou
en réponse à la détermination de ce que les informations d'annonces ont été mises à jour avant la fourniture de l'annonce au premier dispositif utilisateur : la détermination de ce que l'annonce à fournir au premier dispositif utilisateur a été mise à jour et l'annulation de la fourniture de l'annonce au premier dispositif utilisateur dans un cas dans lequel l'annonce à fournir au premier dispositif utilisateur a été mise à jour.

2. Procédé selon la revendication 1, comprenant en outre le maintien d'une table de profils destinée à stocker des profils respectifs du ou des dispositifs utilisateurs.

3. Appareil comprenant un processeur et au moins une mémoire incluant un code de programme informatique, la ou les mémoires et le code de programme informatique étant configurés, avec le processeur, pour amener l'appareil à au moins :
recevoir des données de contexte cryptées recueillies par un ou plusieurs capteurs auprès d'un ou plusieurs dispositifs utilisateurs incluant une ou plusieurs portes dérobées associées à un ou plusieurs mots-clés,
recevoir des informations d'annonces provenant d'un ou plusieurs dispositifs annonceurs incluant un cryptage consultable,
déterminer la fourniture d'une annonce à un premier dispositif utilisateur grâce à une transaction de mise en correspondance fondée sur les données de contexte cryptées du premier dispositif utilisateur et sur les informations d'annonces, et
mettre à disposition l'annonce au premier dispositif utilisateur,
la ou les mémoires et le code de programme informatique étant en outre configurés avec le processeur pour amener l'appareil à détecter des conflits à la suite de mises à jour sur une première table comprenant les données de contexte cryptées et sur une seconde table comprenant les informations d'annonces, ce qui comprend :
la mise à jour de la première table et l'annulation de la fourniture de l'annonce au premier dispositif, en réponse à la détermination de ce que les données de contexte cryptées du premier dispositif utilisateur sont mises à jour alors que la transaction de mise en correspondance est en cours d'exécution et avant la fourniture de l'annonce au premier dispositif utilisateur, ou
en réponse à la détermination de ce que les informations d'annonces ont été mises à jour avant la fourniture de l'annonce au premier dispositif utilisateur : la détermination de ce que l'annonce à fournir au premier dispositif utilisateur a été mise à jour et l'annulation de la fourniture de l'annonce au premier dispositif utilisateur dans un cas dans lequel l'annonce à fournir au premier dispositif utilisateur a été mise à jour.

4. Appareil selon la revendication 3, dans lequel la ou les mémoires et le code de programme informatique sont en outre configurés avec le processeur pour amener l'appareil à maintenir une table de profils destinée à stocker des profils respectifs du ou des dispositifs utilisateurs.

5. Appareil selon la revendication 3 ou la revendication 4, l'appareil étant intégré dans le dispositif de calcul d'un fournisseur de services.

6. Produit de programme informatique comprenant au moins un support non transitoire de stockage pouvant être lu par ordinateur comportant des instructions stockées de code de programme exécutable par ordinateur, les instructions de code de programme exécutable par ordinateur comprenant des instructions de code de programme permettant :
la réception de données de contexte cryptées recueillies par un ou plusieurs capteurs auprès d'un ou plusieurs dispositifs utilisateurs incluant une ou plusieurs portes dérobées associées à un ou plusieurs mots-clés,
la réception d'informations d'annonces provenant d'un ou plusieurs dispositifs annonceurs incluant un cryptage consultable,
la détermination de la fourniture d'une annonce à un premier dispositif utilisateur grâce à une transaction de mise en correspondance fondée sur les données de contexte cryptées du premier dispositif utilisateur et sur les informations d'annonces, et
l'opération consistant à mettre à disposition l'annonce au premier dispositif utilisateur, les instructions de code de programme exécutable par ordinateur comprenant en outre des instructions de code de programme destinées à la détection de conflits à la suite de mises à jour sur une première table comprenant les données de contexte cryptées et sur une seconde table comprenant les informations d'annonces, comprenant :
en réponse à la détermination de ce que les données de contexte cryptées du premier dispositif utilisateur sont mises à jour alors que la transaction de mise en correspondance est en cours d'exécution et avant la fourniture de l'annonce au premier dispositif utilisateur : la mise à jour de la première table et l'annulation de la fourniture de l'annonce au premier dispositif, ou
en réponse à la détermination de ce que les informations d'annonces ont été mises à jour avant la fourniture de l'annonce au premier dispositif utilisateur : la détermination de ce que l'annonce à fournir au premier dispositif utilisateur a été mise à jour et l'annulation de la fourniture de l'annonce au premier dispositif utilisateur dans un cas dans lequel l'annonce à fournir au premier dispositif utilisateur a été mise à jour.
